# EUROPEAN PATENT APPLICATION

(11) **EP 2 784 518 A2**
(43) Date of publication of application: **01.10.2014**
(21) Application number: 14001104.0
(22) Date of filing: 26.03.2014
(51) Int. Cl.: G01P 3/68, F42B 12/00, F41G 3/00

(54) **Projectile and projectile flight parameter measurement apparatus for a weapon**

(30) Priority: 27.03.2013 US 201361805534 P
(71) Applicant: KMS Consulting, LLC, Kennebunk, ME 04043 (US)
(72) Inventor: Sullivan, Kevin M., Kennebunk, Maine 04043 (US); Martinez, Marcelo E., 5152 Carlos Pas (AR)
(74) Representative: Grimm, Ekkehard

(57) **Abstract**

An ammunition projectile has a plurality of distinctive marks arranged in at least one circular row around the projectile body, with the row of marks extending perpendicular to its longitudinal axis. The marks are illuminated by a strobe flash and successive images are captured by an electronic imager as the projectile exits the barrel of a weapon. A computer, coupled to the imager, processes the electronic signals to determine projectile yaw, spin and muzzle velocity.

## Description

The present invention relates to a projectile and to a projectile flight parameter measurement apparatus.

### BACKGROUND OF THE INVENTION

While fire control systems have improved as sensor fidelity, electronic miniaturization and improvements in computational capabilities came of age, the inability to measure projectile yaw in operational weapons remains an unsolved problem that stands in the way of improvements in the precision aiming of firearms and weapons.

Specialized high-speed imaging and laboratory methodologies and equipment which are presently used to determine and measure yaw cannot be readily incorporated into firearms and weapons used in the field.

As a projectile exits a barrel it enters a "dirty" environment that obscures simple detection due to the wash of gases from the propellant (smoke, powder residue, un-burnt powder and bright illumination from the propellant burn). This situation adds to the difficulty of measuring projectile yaw and/or determining projectile motion parameters such as velocity and spin.

As a consequence, no practical or effective solution is presently available for firearms and weapons (hereinafter collectively referred to as "weapons") to measure initial flight parameters where projectiles are fired from weapons. The measurement of initial flight parameters allows fire control systems to record repeatable bias errors which include yaw and muzzle velocity. Ballistic algorithms can use recorded measurements in lot performance to improve predictive algorithms thus improving the precision of aim points and shooting.

Numerous methods of chronographic measurement of muzzle velocity are known in the art. The rate of change of velocity (acceleration/de-acceleration) is not normally measured, however, because it must be based upon multiple measurements of projectile velocity.

Variations in projectile spin create some variation in shot-toshot precision but the magnitude of spin variation, as compared to the effect of yaw, does not significantly affect the flight ballistics in a way that can be translated into aiming improvements. Therefore, spin has also rarely been measured, even in the laboratory.

### SUMMARY OF THE INVENTION

A principal objective of the present invention, therefore, is to provide a flight parameter measurement system, for use in the field with an operational weapon, that can determine projectile muzzle velocity, spin and yaw at a plurality of points during projectile's initial flight after barrel exit through a measurement device housed in a flash suppressor or muzzle break.

It is a further objective of the present invention to provide a flight parameter measurement system for use with an operational weapon that can determine the rate of change of muzzle velocity, spin and yaw.

These objects are solved with a projectile according to claim 1 and with a projectile flight parameter measurement apparatus according to claim 8. Preferred embodiments are disclosed in the dependent claims.

These objects, as well as still further objects which will become apparent from the discussion that follows, are achieved, in accordance to the present invention by providing an otherwise conventional ammunition projectile with a plurality of marks arranged in at least one circular row around the projectile body, with the row of marks extending perpendicular to the longitudinal axis of the projectile and being of such character as to be seen by an optical detector while exiting the barrel.

Preferably at least some of the marks have distinctive patterns such that the optical detector can discriminate between marks with different patterns.

Alternatively or in addition, at least some of the marks have distinctive colors such that the optical detector can discriminate between marks with different colors.

Alternatively or in addition, at least some of the marks are luminescent.

All of the marks may have the same shape, or some of the marks may have a different shape than others. For example, at least some of the marks may be in the shape of a cross.

Based on the use of such an ammunition projectile, the present invention provides a projectile flight parameter measurement system which is usable with a weapon to accomplish the objectives described above. This system preferably includes the following components:
(a) a tubular housing which is configured to be attached to the weapon with its longitudinal axis aligned with the central longitudinal axis of the gun barrel, so as to receive launched projectiles as they leave the muzzle end of the barrel;
(b) at least one light beam emitter arranged in the housing for illuminating the projectiles as they pass through the housing;
(c) at least one electronic imager arranged in the housing for viewing the projectile markings that are illuminated by the emitter, and for producing electronic signals representing digital images of the projectiles; and
(d) an electronic computational logic device, coupled to the electronic imager(s), for processing the electronic signals to determine one or more initial flight parameters of a projectile that has passed through the housing. According to the invention, these projectile flight parameters comprise one or more of the following:
   (1) projectile muzzle velocity;
   (2) projectile spin;
   (3) projectile yaw;
   (4) projectile rate of change of muzzle velocity;
   (5) projectile rate of change of spin; and
   (6) projectile rate of change of yaw.

The present invention makes it possible to measure the asymmetrical gas expansion forces on the base of a projectile that is exiting a barrel. When utilizing induced fluorescence, laser or LED light can be used to detect the relative movement and position of the projectile with respect to the centerline of the barrel so as to measure the asymmetric expansion (leakage) of gases as it exits the barrel.

The beam emitter provides strobe illumination and the electronic imager captures images of the projectiles as they are illuminated by the emitter. In particular, the emitter strobes the illumination and the imager captures stop-action images at the instants of illumination.

Preferably, imagers capture two, or three, or more successive views of the projectiles as they pass through the housing. For example, the imager may capture views at different angles around a circumference of the projectiles as they pass through the housing or they may capture images at the same angle at successive points along the flight path.

The projectile according to the invention has at least some markings having different colors than others. Also the projectile can have at least some of the markings which are luminescent. Some of the markings can also have different shape than others. But all the markings can have the same shape. It can be also preferable that the markings are in the shape of a cross.

According to a preferred embodiment of the invention, the system emits a radiation beam or a beam of ions. The radiation beam may be in one of the UV, visual and/or IR spectral bands, for example.

According to another preferred embodiment of the invention, the weapon includes an aiming device for the gun barrel, and the logic device is coupled with the aiming device for adjusting the aim of the barrel in dependence upon the flight parameters.

The apparatus according to the invention thus utilizes short-duration strobe illumination of a projectile that has special marks on its surface. As the strobe illuminates the projectile, the relative position and attitude of the projectile is observed.

Advantageously, the projectile markings are imprinted with specialized dyes that are visible when exposed to illumination (strobes) at certain wavelengths. This facilitates optical tracking of the index marks on the projectiles exiting the barrel and traveling through a flash suppressor or muzzle break.

It is desirable to use laser or LED light and "induced fluorescence" obtained from different colored fluorescent dyes used for the markings imprinted on the projectile, denoting the indexed rotation position of the projectile, to increase the visibility of the markings. This technique provides for a high signal-to-noise ratio which is very useful when using electronic and signal processing equipment to detect movements of the projectile in a "dirty" environment. As previously noted, the environment for observation is "washed" with smoke, un-burnt powder residue, burnt powder residue and burning propellant so that it is difficult, if not impossible, to determine the position and attitude of the projectile by viewing only its outline.

When utilizing induced fluorescence, laser or LED light can be used to detect the relative movement and position of the projectile with respect to the centerline of the barrel so as to measure the asymmetric expansion (leakage) of gases when a projectile exits a barrel.

Generally speaking, projectiles do not undergo a complete rotation in a distance less than 250-300 millimeters. If a yaw and muzzle velocity device was devised to observe a complete rotation, it would probably become too long and bulky for rifleman. Accordingly, multiple viewing points and differentiated indexing points on a projectile allow for a precise measurement of yaw and muzzle velocity over a short distance, allowing the device to have an optimum compact nature.

The following Table illustrates the relationship of the muzzle velocity and spin to measurement distance for three different weapon systems.

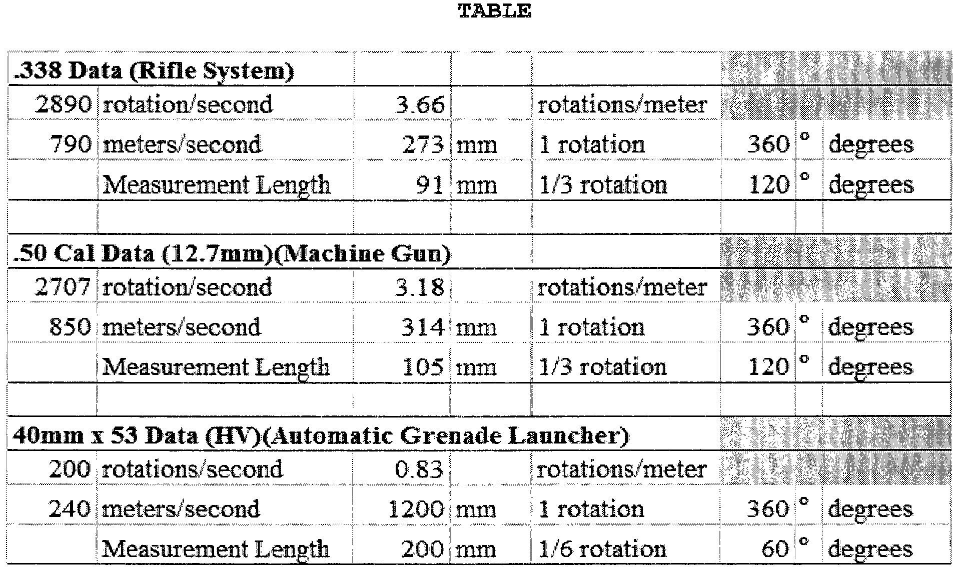

To measure the motion parameters (muzzle velocity, spin and axis rotation (yaw) as well as acceleration/de-acceleration of the projectile, the projectile is illuminated two or more times as it exits the barrel thru the muzzle of the weapon. After each illumination and image capture, the positions of the projectile's indexing marks are determined and stored. The illumination sequence is repeated at known elapsed times following barrel exit. As a result, this process allows for accurate determination of the yaw, spin and muzzle velocity, as well as any acceleration/de-acceleration of the projectile in a compact device.

According to one embodiment of the invention the logic device of the apparatus can determine the projectile yaw. It is also proposed that the logic device determines the projectile spin and/or the logic device determines the projectile muzzle velocity.

Recorded projectile measurements are then transmitted to a fire control system (internal or external to the flash suppressor or muzzle break). This allows the fire control computer to classify the projectile's performance in the particular individual weapon system. This can be done as part of a registration methodology or for improved prediction of aiming points. Since ammunition muzzle velocity, spin and yaw vary from ammunition lot-to-lot and from gun-to-gun, the detection of changes in rotational axis, yaw and muzzle velocity for each individual weapon provided with the system of the present invention result in continuous improvements in aiming precision.

In summary, the system makes it possible to measure the precise muzzle exit velocity, spin and yaw of the projectile while at two or more positions while still transiting a flash suppressor or muzzle break. The system can also provide the individual weapon with a sensor input leading to better precision and ballistic prediction when the measurements are incorporated into fire control computations.

For a full understanding of the present invention, reference should now be made to the following detailed description of the preferred embodiments of the invention as illustrated in the accompanying drawings.

### BRIEF DESCRIPTION OF THE DRAWINGS

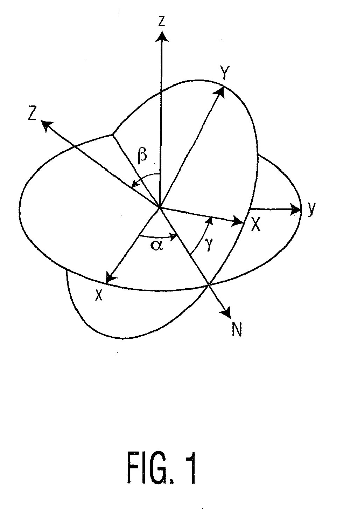

Fig. 1 is a Cartesian coordinate diagram showing various angles of yaw.
Fig. 1 is a time sequence diagram showing a projectile, provided with markings according to the invention, leaving the barrel of a weapon.
Fig. 3 is a top and side view of the projectile of Fig. 2 showing rotational axis changes.
Fig. 4 is a side view of the projectile of Fig. 2 showing successive angles of yaw.
Figs. 5 and 6 are front and side views of a flash suppressor for RWS and 40mm AGLs incorporating an emitter (Fig. 5) and an optical detector (Fig. 6) according to the invention.
Fig. 7 is a block diagram of the system according to the invention incorporated into a flash suppressor for a 40mm AGL.
Fig. 8 is a schematic view of a flash suppresser showing gas wash, powder burn and debris that obscures observation of the fired projectile.
Fig. 9 is a schematic view of a flash suppresser showing the flash illumination of a projectile in first position.
Fig. 10 is a schematic view of the flash suppresser of Fig. 11 showing the image capture of markings on the projectile in the first position.
Fig. 11 is a schematic view of a flash suppresser showing the flash illumination of a projectile in a second position.
Fig. 12 is a schematic view of the flash suppresser of Fig. 13 showing the image capture of markings on the projectile in the second position.
Fig. 13 is a schematic view of a flash suppresser showing the flash illumination of a projectile in a third position.
Fig. 14 is a schematic view of a flash suppresser of Fig. 15 showing the image capture of markings on the projectile in the third position.
Figs. 15a, 15b, 15c and 15d are cutaway views of a flash suppressor at successive instants of time as a projectile is launched and imaged as it passes through the device.
Figs. 16a and 16b constitute a flow chart showing the operation of the system according to the present invention.

### DESCRIPTION OF THE PREFERRED EMBODIMENTS

The preferred embodiments of the invention will now be described with reference to Figs. 1-16 of the drawings. Identical elements in the various figures have been designated with the same reference numerals.

The system according to the invention utilizes the following components:
- Projectiles provided with high contrast markings (e.g. color dyed) which may include luminescent characteristics.
- Strobe illumination of the projectiles as they exit the barrel of a gun and pass through a flash suppressor or muzzle break.
- Imagers that capture positions of the projectile markings. Three measurement points are desired so that the rates of change of the parameters can be measured.
- Optical measurements are captured and recorded, preferably from multiple angles to confirm the rotation axis.
- A computer with a signal processor, coupled to the imagers, determines the locations of the projectile markings at successive instants of time and computes and records the yaw, spin and muzzle velocity and the rates of change in these parameters.

Generally, for integration into a weapon system it is advantageous to incorporate the illumination and image detection into flash suppressor or muzzle break. By incorporation of these elements into a robust housing, additional spill-light is not transmitted. The illumination of the projectile coincides with the light resulting from propellant burn, commonly known as "muzzle flash". By incorporating the illuminators and electronic imagers into a common robust housing it is possible to utilize the flow of un-burnt powder in a manner that optimizes recording of the projectile yaw, spin and muzzle velocity. Integration of the system into a flash suppressor or muzzle break provides for simple upgrading or retrofitting of operational weapons.

Fig. 1 shows two Cartesian coordinate systems, x, y, z and X,Y,Z, arranged along the barrel axis N of a weapon. The two systems have are angularly displaced with respect to each other by angles α, β and y. The figure demonstrates the many degrees of freedom of a projectile in space which result in variations in ballistic flight.

Fig, 2 shows a projectile 10 provided with markings 12 according to the present invention. The projectile is shown leaving the barrel 14 of a weapon and progressing along the path of the barrel axis 16 where it is viewed at three successive moments in time.

The marks 12 on the projectile are arranged in a circular row around projectile body transverse to the projectile axis. In this case, the marks are cross-shaped, making identification easier by character (pattern§ recognition. The marks can also have other various distinctive patterns and shapes so that the system can discriminate between the different marks.

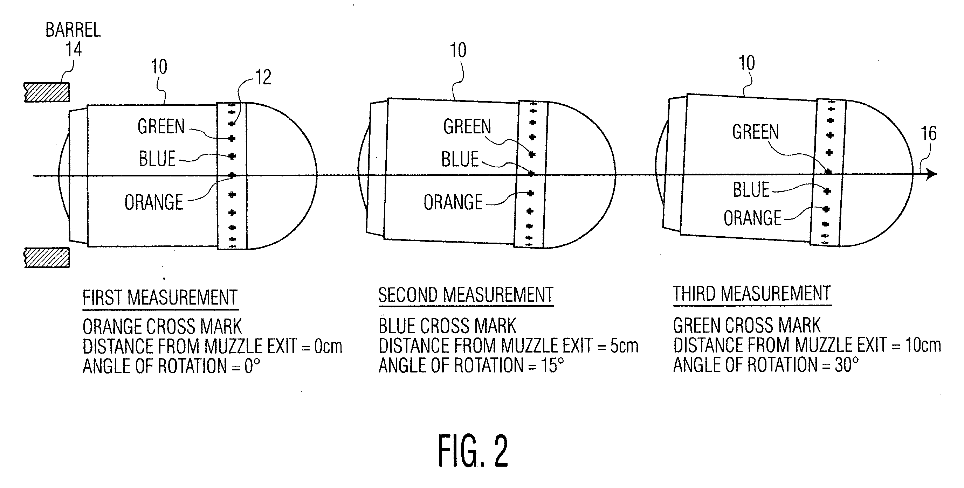

In the projectile of Fig. 2 some of the marks have distinctive colors such that an optical detector can discriminate between the marks of different color.

For better visibility amid the muzzle flash, the marks may be imprinted with a dye that is luminescent when illuminated by radiation of a particular frequency.

As may be seen in the diagram, three measurements are made by viewing the projectile at successive instants of time. By viewing angular positions of the colored markings it is possible to determine the projectile spin. By determining the successive distances from the barrel it is possible to determine the muzzle velocity.

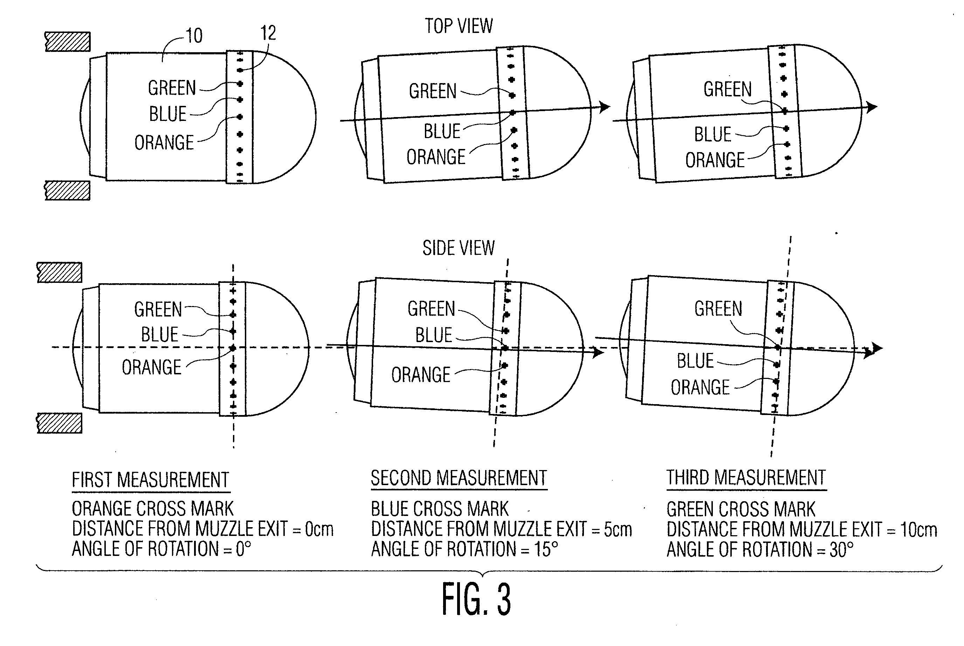

Fig. 3 is a diagram, similar to Fig. 2, which shows the projectile from two vantage points that are angularly spaced by 90°; that is, a top view and a side view. By means of this additional point of view it is possible to more completely determine the projectile yaw at the successive instants of time.

By determining the yaw, spin and muzzle velocity at successive instants of time it is possible to determine the rate of change of these parameters.

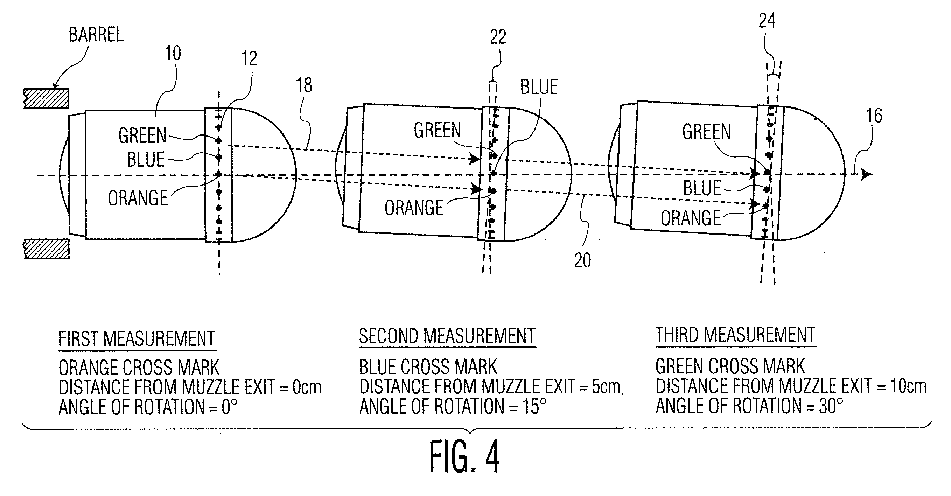

Fig. 4 is still another diagram showing the projectile 10 with markings 12 viewed in three successive instants of time. The spin of the projectile may be seen by observing the marks 12 which rotate, as indicated by the dashed line 18, which intersects a common mark in the three images, and 20 which intersects another. In addition, the yaw may be observed by comparing the positions of a line intersecting all the marks on each projectile with a line transverse to the central axis 16. In Fig. 4, the angle of yaw is seen to be increasing from the first image (no angle of yaw), to the second (small angle 22) and to the third (larger angle 24).

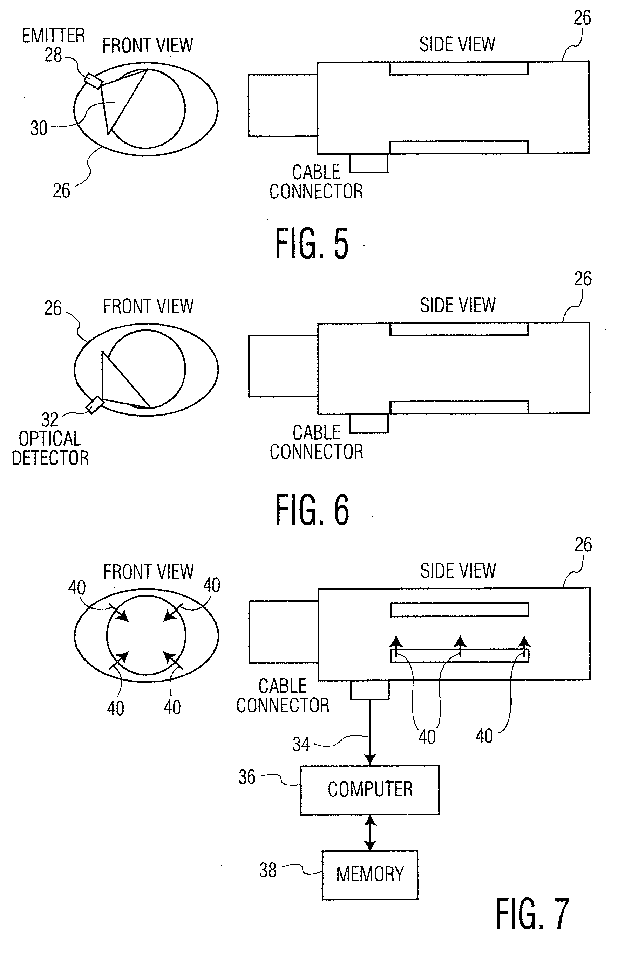

A system for measuring the three projectile parameters -- yaw, spin and muzzle velocity -- as well as the rates of change of these parameters, is represented in Figs. 5-7.

Figs. 5 and 6 are representational diagrams of a flash suppressor 26 for a 40mm automatic grenade launcher (AGL) showing both front and side views in cross-section.

In Fig. 5 an emitter 28 emits a momentary flash illumination 30 as the projectile passes through, electronically triggered by the firing mechanism of the weapon. The emitter repeats the flash illumination one or more times (preferably resulting in three flashes altogether) thus "freezing" the projectile at successive instants of time.

In Fig. 6 one or more optical detectors 32 capture an image of the projectile at the successive instants of time. The optical detector is preferably a CCD camera which is triggered to view the projectile during successive windows of time that overlap with the instants of flash illumination. Advantageously, three separate cameras may be aligned in spaced positions along the central axis to capture images as shown in Fig. 2, but a single camera may suffice to capture all three images.

Advantageously one or more additional cameras 32 may be aligned along the central axis to view the projectile from a different vantage point and capture images of a different side of the projectile as shown in Fig. 3.

Fig. 7 illustrates a complete system comprising a flash suppressor 26 incorporating one or more emitters 28 and one or more optical detectors 32, coupled via a cable connector 34 to a computer 36 with an associated memory 38. By way of example, positions of the emitters 28 and detectors 32 are shown by arrows 40 in both the front view and side view of the suppressor.

In operation, signals representing the digital images captured by the detectors 32 are passed to the computer for processing. The computer performs character recognition on the markings of each projectile and calculates the yaw, spin and muzzle velocity of the projectile. The results are recorded in the memory 38 for use by the fire control system which then calculates the expected ballistic path of the next projectile to be launched.

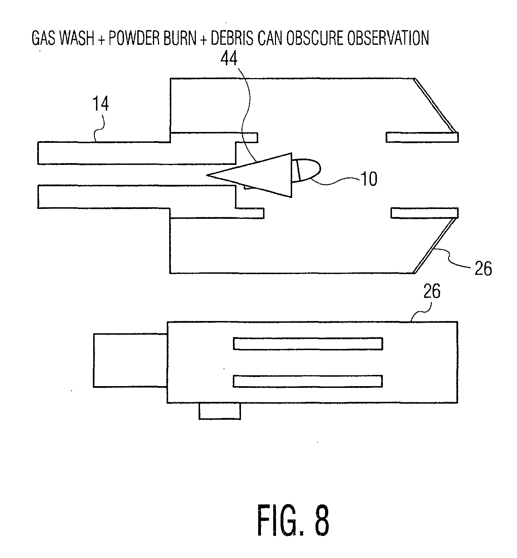

The operation of the system according to the invention will now be described with reference to Figs. 8-14. These figures are all representative diagrams of a flash suppressor at different stages while a projectile passes through.

Fig. 8 shows a flash suppressor 26 attached to the barrel 14 of a gun at the moment a projectile 10 emerges from the muzzle. When this occurs, gas wash, burned powder and other debris emerge with it, obscuring visibility in the suppressor chamber.

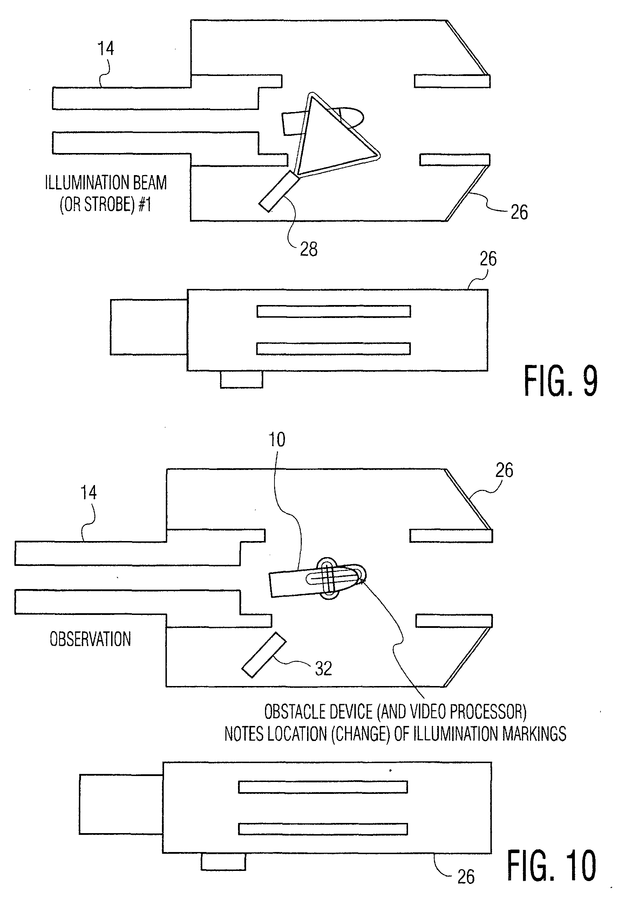

Figs. 9 and 10 illustrate capturing an image of the projectile using the stop-action flash photography. The image capture occurs a short time after the initial launch, illustrated in

Fig. 9, when the blast of debris has passed by the projectile 10, leaving the projectile visible to an electronic imager 32 when illuminated by an emitter 28.

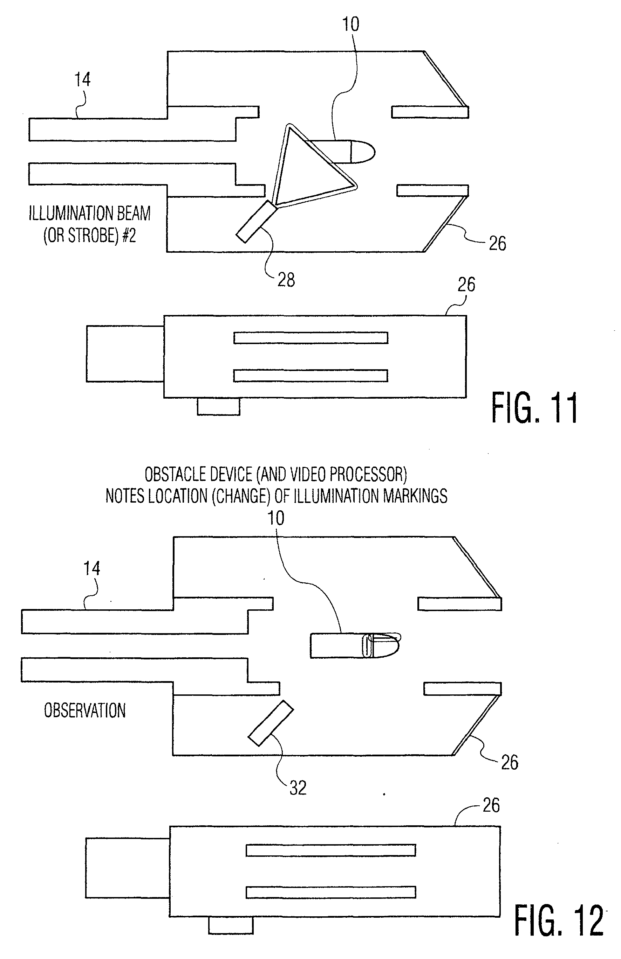

Figs. 11 and 12 illustrate the capture of a second image of the projectile at a second, successive instant of time. Similarly,

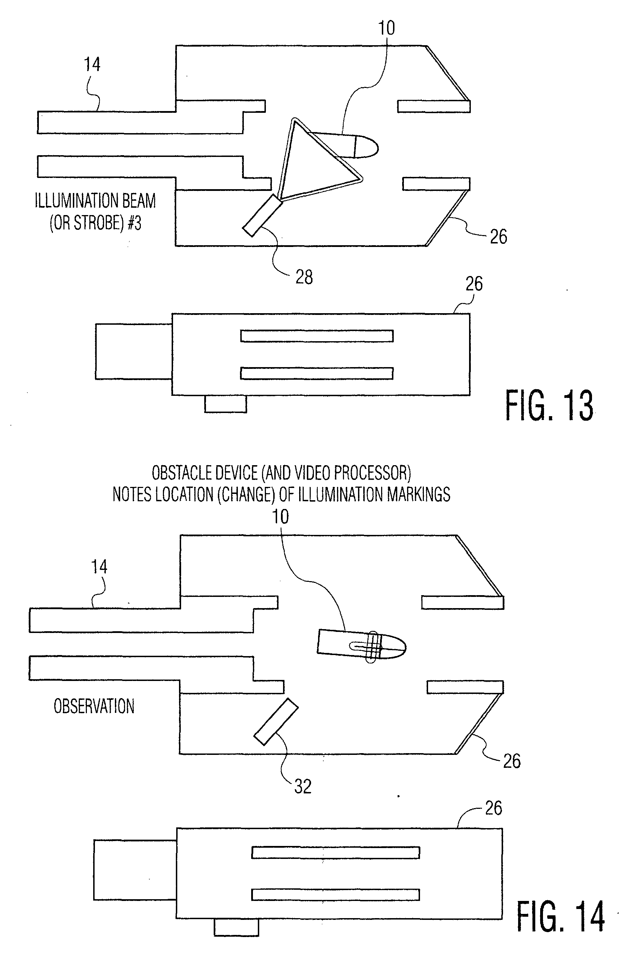

Figs. 13 and 14 illustrate the capture of a third image at a third successive instant of time. The markings on the projectile are recognized and their positions from one instant to the next are compared in the computer to determine the projectile's yaw, spin and muzzle velocity.

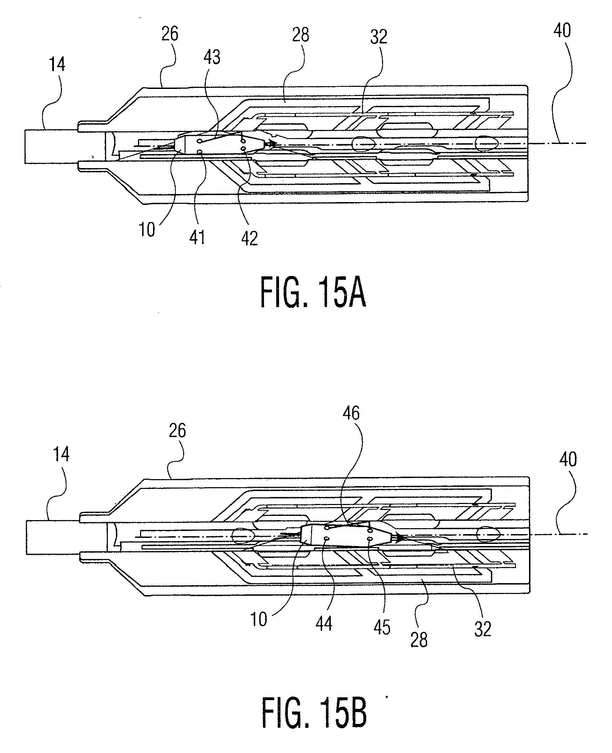

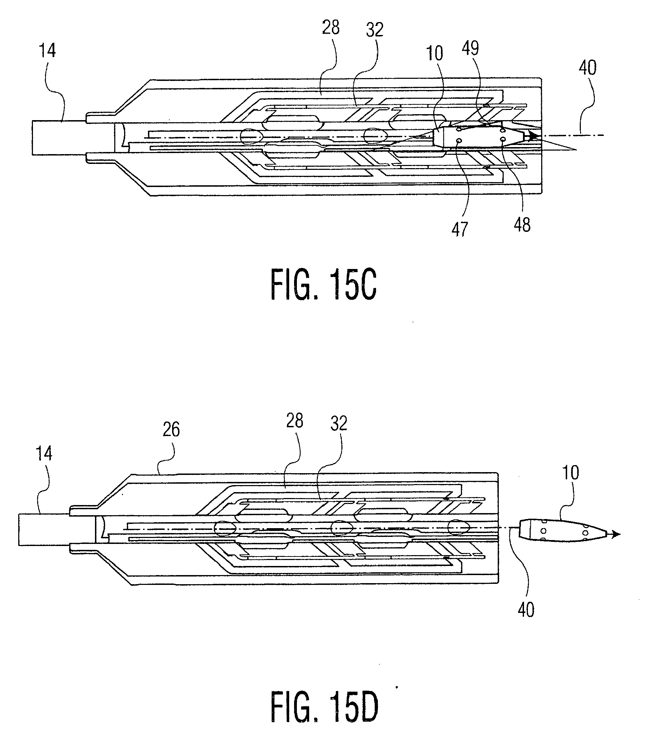

Figs. 15a through 15d show the flash suppressor 26 incorporating the system of the present invention at successive instants of time as a projectile 10 passes through it along a central axis 40. In Fig. 15a the projectile is seen leaving the barrel 14 of the gun and being imaged in a first strobe flash. The positions of markings 41 and 42 near the front and the rear, respectively, of the projectile are captured and identified as indicated by the arrow 43. In Fig. 15b markings 44 and 45 are identified as indicated by arrow 46 and in Fig. 15c markings 47 and 48 are identified as indicated by arrow 49. Fig. 15d shows the projectile 10 with a slight yaw as it leaves the flash suppressor 26.

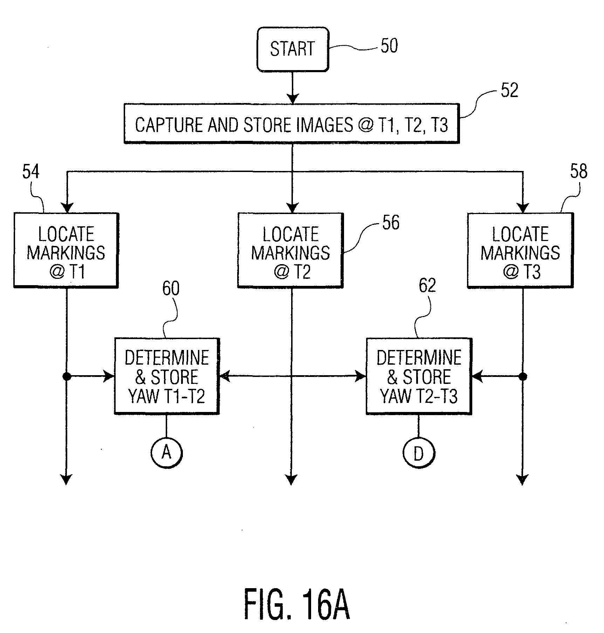

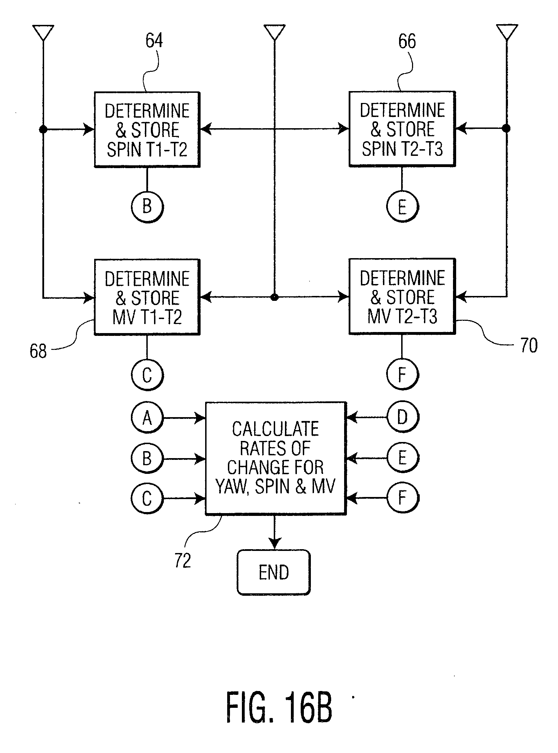

The computer 36, controlled by software, operates according to an algorithm as represented by the flow chart of Figs. 16a and 16b. The program starts at block 50 upon receipt of a trigger signal that fires the projectile 10 at time T0. Three successive images of the projectile are captured by flash photography and stored in the memory 38 at times T1, T2 and T3, respectively (block 52). The computer processes the signals defining each image in turn (blocks 54, 56 and 58) to recognize the markings on the projectile and determine and store the coordinates of these markings as they appeared at times T1, T2 and T3. Once the locations of the markings are available, the computer calculates and stores the projectile's yaw, spin and muzzle velocity (MV), respectively, by determining changes in the marking locations, first between times T1 and T2 and then between times T2 and T3 (blocks 60-70). Once all these parameters are available (outputs A, B, C, D, E and F) the computer calculates the changes in yaw, spin and MV and determines their respective rates of change (block 72).

There has thus been shown and described a novel system for measuring the yaw, spin and muzzle velocity of an ammunition projectile which fulfills all the objects and advantages sought therefor. Many changes, modifications, variations and other uses and applications of the subject invention will, however, become apparent to those skilled in the art after considering this specification and the accompanying drawings which disclose the preferred embodiments thereof. All such changes, modifications, variations and other uses and applications which do not depart from the spirit and scope of the invention are deemed to be covered by the invention, which is to be limited only by the claims which follow.

## Claims

1. A projectile configured to be fired from a gun barrel of a weapon, said projectile having a cylindrical body defining a central longitudinal axis, the improvement comprising a plurality of marks on said projectile arranged in at least one circular row around said body, with said row extending perpendicular to said longitudinal axis, said marks being of such character as to be seen by an optical detector while exiting from the barrel.

2. The projectile recited in claim 1, wherein at least some of the marks have distinctive patterns, such that the optical detector can discriminate between marks with different patterns.

3. The projectile recited in claim 1, wherein at least some of the marks have distinctive colors, such that the optical detector can discriminate between marks with different colors.

4. The projectile recited in claim 1, wherein at least some of the marks are luminescent.

5. The projectile recited in claim 1, wherein at least some of the marks are of a different shape than others.

6. The projectile recited in claim 1, wherein all of the marks have the same shape.

7. The projectile defined in claim 6, wherein at least some of the marks are in the shape of a cross.

8. Projectile flight parameter measurement apparatus for a weapon having a gun barrel defining a central longitudinal axis extending between a breech end and an opposite, muzzle end, said weapon being operative to launch projectiles through said gun barrel, said flight parameter measurement apparatus comprising:
(a) a tubular housing configured to be attached to the weapon to receive launched projectiles as they leave the muzzle end of the gun barrel, said tubular housing having a longitudinal axis aligned with the central longitudinal axis of the gun barrel;
(b) at least one beam emitter disposed in the housing for illuminating the projectiles as they pass through the housing;
(c) at least one electronic imager disposed in the housing for viewing the projectiles that are illuminated by the emitter and for producing electronic signals representing images of the projectiles;
(d) an electronic computational logic device, coupled to said at least one electronic imager, for processing said signals to determine at least one flight parameter of a projectile that has passed through the housing, said projectile flight parameters being selected from the group consisting of:
(1) projectile yaw;
(2) projectile spin;
(3) projectile muzzle velocity.

9. The apparatus recited in claim 8, wherein said logic device is further operative to determine projectile flight parameters selected from the group consisting of:
(5) projectile rate of change of yaw;
(6) projectile rate of change of spin; and
(7) projectile rate of change of muzzle velocity.

10. The apparatus recited in claim 8, wherein said at least one emitter provides strobe illumination and said at least one imager captures stop-action views.

11. The apparatus recited in claim 8, wherein said at least one emitter strobes the illumination and said at least one imager captures views of the projectiles at the instants of the illumination as the projectiles pass through the housing.

12. The apparatus recited in claim 8, wherein said at least one imager captures at least two successive views of the projectiles as they pass through the housing, in particular three successive views.

13. The apparatus recited in claim 8, wherein said at least one imager captures views at different angles around a circumference of the projectiles as they pass through the housing.

14. The apparatus recited in claim 8, wherein the projectiles have a cylindrical body defining a central longitudinal axis and a plurality of markings arranged in a circular row around the body, with said row extending perpendicular to said longitudinal axis.

15. The apparatus recited in claim 14, wherein at least some of the markings are colored.

16. The apparatus recited in claim 8, wherein said at least one emitter emits a radiation beam, in particular at least one of IR, visible light and UV light.

17. The apparatus recited in claim 8, wherein said at least one emitter emits an ion beam.

18. The apparatus recited in claim 8, wherein said weapon includes an aiming device for the gun barrel, and wherein said logic device is coupled with said aiming device for adjusting the aim of the barrel in dependence upon said at least one flight parameter.
